# EUROPEAN PATENT SPECIFICATION

(11) **EP 2 326 887 B1**
(45) Date of publication and mention of the grant of the patent: **16.11.2016**
(21) Application number: 09737139.7
(22) Date of filing: 19.08.2009
(51) Int. Cl.: F24J 2/04, E04D 13/18

(54) **MODULAR ROOFING STRUCTURE FOR CATCHING SOLAR THERMAL ENERGY AND RELATIVE ENERGY MODULE**
MODULARE DACHEINDECKUNGSSTRUKTUR, DIE SICH ZUM AUFFANGEN VON SOLARWÄRMEENERGIE EIGNET, UND ENERGIEMODUL DAFÜR
STRUCTURE DE COUVERTURE MODULAIRE SE PRÊTANT À UNE CAPTURE D'ÉNERGIE THERMIQUE D'ORIGINE SOLAIRE, ET MODULE D'ÉNERGIE CORRESPONDANT

(30) Priority: 21.08.2008 IT TO20080641
(43) Date of publication of application: 01.06.2011
(73) Proprietor: KME Italy S.p.A., 50127 Firenze (IT)
(72) Inventor: PANELLA, Fabiana, 50127 Firenze (IT)
(74) Representative: Plebani, Rinaldo
(86) International application number: PCT/IB2009/006581
(87) International publication number: WO 2010/020859

(56) References cited:
- WO-A-2005/042872
- JP-U- 56 100 913
- NL-A- 9 200 536

## Description

### Technical field

The present invention relates to a modular roofing structure suitable for capturing thermal energy of solar origin, as well as to an energy module for said structure.

### State of the art

It is known, for example from FR2896857, to capture thermal energy of solar origin by means of a solar collector set on the roof of a building and consisting of a panel, in general with a covering glass, along which a fluid (water, air, or the like) is made to flow, which removes the solar heat captured by direct irradiation and by the "greenhouse effect".

The above solution is not satisfactory either from an aesthetic or from an energetic point of view and in any case is not integrated in the structure of the roof and is consequently susceptible to damage from adverse weather conditions.

From US-A-4269172 a roofing structure is known, which carries, integrated therein, a system for capturing solar heat. The structure is constituted by panels that are arranged, jointed to one another, in the direction of the pitch of the roof. By "pitch", here and in what follows, is meant the part of the roof, which is in general sloping, which extends from the ridge of the roof, i.e., from its top, to the lower longitudinal edge of the roof, defining the transverse profile of the roof itself. Each of the panels, which are shaped so as to present a concavity facing in use on the side opposite to the pitch, houses in said concavity a pipe made of plastic material with circular cross section, which is bent in volutes and the ends of which terminate in a fluid-collecting manifold. The fluid, generally water, which is made to flow in the pipe in use, collects the heat irradiated by the sun not only by direct irradiation, but also by conduction. Given the structure described, transfer by conduction is, however, poor and the main advantage of the roofing structure described is its sturdiness and a certain aesthetic linearity. However, the roof according to US-A-4269172 has clearly an aesthetic appearance that is still markedly different from that of a roof without solar collector. Other roofing structures suited for capturing solar heat are described in JP56100913U, WO2005042872A1 and NL9200536A.

Consequently one aim of the present invention is to provide a modular roofing structure suited for capturing thermal energy of solar origin that will present a pleasant aesthetic appearance, in effect masking the solar-energy-capturing modules, that will be sturdy and compact, that will be easy to produce and install, that will enable maximization of the amount of heat that can be recovered by thermal conduction, and that, above all, will enable provision, on the roof itself, of "energy" areas for capturing solar energy and "traditional" areas without solar collectors, which will be aesthetically indistinguishable from one another for an external observer.

### Summary of the invention

According to the present invention, a modular roofing structure is hence provided suited for capturing thermal energy of solar origin as defined in Claim 1. Moreover provided is also an energy module for said structure as defined in Claim 13.

In particular, the roofing structure comprises a plurality of adjacent panels made of a metal sheet, in which first panels have, each, a central portion coined so as to define on the panel at least one channel-shaped ribbing arranged in use oriented in the direction of the pitch of the roof that is to be covered and with the concavity facing the pitch so as to delimit between the pitch and the panel a channel-shaped compartment filled in use with an insulating material.

According to the invention, at least one first plurality of the first panels have the ribbing which has a first pre-set height and supports on the side opposite to the pitch an energy module, which in turn comprises at least one second panel of a shape matching that of the ribbing and designed to overlappingly couple therewith so as to define, substantially without solution of continuity, an extension in height thereof, and at least one pipe made of the same metal material as that of the panels, having flattened cross section, arranged in the direction of the pitch and with its respective opposite plane faces sandwiched tight between a respective plane, external and top surface of the ribbing and a respective plane, internal and bottom surface of the second panel.

In particular, the energy module comprises a plurality of pipes with flattened cross section, opposite ends of which are hydraulically connected to respective manifolds arranged on the pitch, in a direction transverse thereto. In addition, the energy module also comprises a third panel having a shape matching that of the second panel thereof, overlappingly coupled to the latter on the side facing the first panels in such a way as to delimit between each second panel and third panel overlappingly coupled to one another a channel-shaped chamber, which houses inside it the aforesaid at least one pipe/plurality of pipes with flattened cross section, with the plane faces coupled in contact against the second panel and third panel, elastically pressed against said panels and/or glued to said panels via a layer of thermally conductive adhesive.

Finally, according to a further characteristic of the invention, the structure also comprises a second plurality of first panels, the ribbing of which has a second pre-set height, greater than the first and such that the profile of the ribbing having the second pre-set height is substantially the same as that of the unit constituted by each energy module and by the corresponding ribbing having the first pre-set height to which the energy module is in use overlappingly coupled.

In this way, a completely modular roofing structure is obtained, which can be made either completely or only partially designed to capture solar thermal energy, the parts provided with energy module and the parts possibly without energy module in any case presenting the same aesthetic appearance. The structure according to the invention is moreover easy and inexpensive to produce, in particular using sheets of copper or alloys thereof for producing the panels and the pipes, is easy to install and to remove for maintenance interventions, is robust, compact and, above all, thanks to the large surfaces of contact that can be obtained, capable of directing towards the pipes, by direct thermal conduction, all the solar energy that the roof receives by irradiation. In the pipes a thermal fluid, such as for example water, is made to flow in use. In this way, an optimal energy efficiency is obtained.

### Brief description of the figures

A preferred embodiment of the invention will now be described, purely by way of non-limiting example with reference to the figures of the attached drawings, wherein:
- Figure 1 is a schematic illustration of a cross-sectional view of a roof of a building provided with the roofing structure according to the present invention;
- Figure 2a, 2b is a schematic illustration, at an enlarged scale and in cross section, i.e., in a section perpendicular to the direction of extension of a pitch of the roof of Figure 1, of two different details of the roofing structure according to the invention;
- Figure 3 illustrates at an enlarged scale a detail of an energy module illustrated in Figure 2a;
- Figures 4 and 5 are details in cross section of elements that make up the energy module of Figure 3;
- Figure 6 illustrates a schematic perspective view of the energy module of Figure 3 with parts removed to enable a better understanding; and
- Figure 7 is a perspective view of a detail of a hydraulic connection for the energy module of Figure 6.

### Detailed description

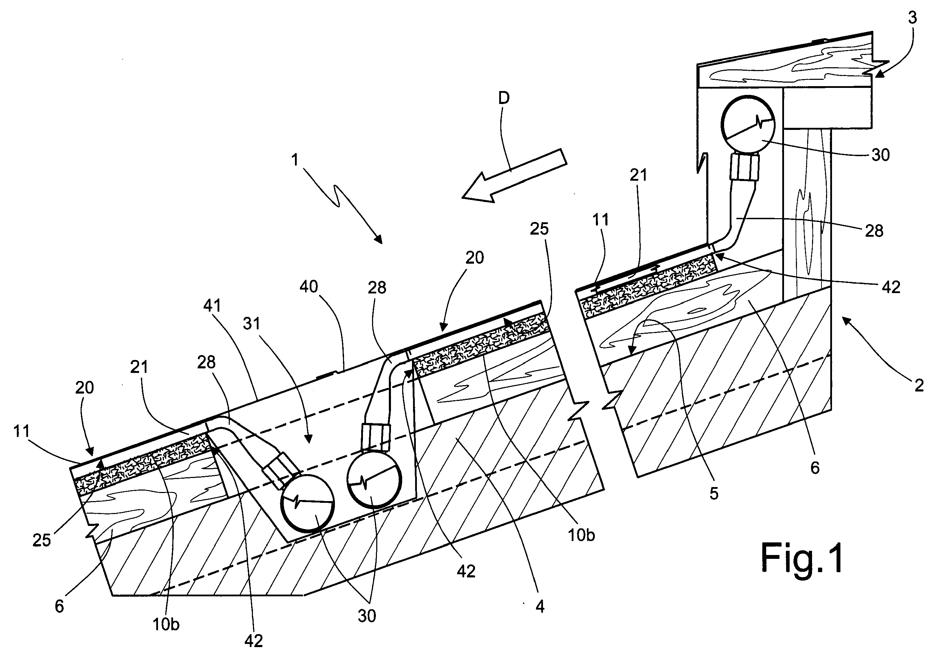

With reference to Figures 1 to 3 and 6, indicated as a whole by reference number 1 is a roofing structure for a roof 2 having a ridge 3 and a pitch 4 that extends in a direction D transverse to the longitudinal development of the roof 2 and that has a top surface 5, covered in use by the roofing structure 1, preferably with the interposition of a wooden boarding 6, which serves for anchorage of a jointing device for adjacent metal panels, which is described in the copending patent application filed in the name of the present applicant and entitled: "MODULAR ROOFING SYSTEM AND ASSOCIATED JOINTING DEVICE" filed on the same date.

The roofing structure 1 comprises a plurality of panels 10, 11, 12 adjacent to one another and, as will be seen, in part overlappingly arranged on one another, made of metal sheet, preferably copper or a copper alloy.

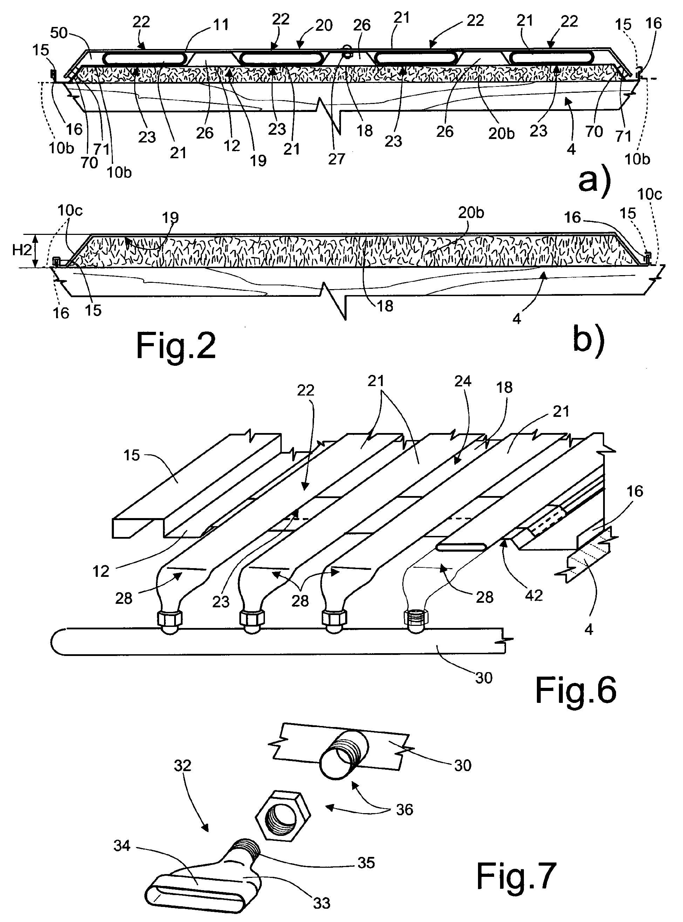

The roofing structure 1 comprises firstly a plurality of first panels 10, in the non-limiting example illustrated of two different types, designated, respectively, by 10b and 10c (Figures 2a and 2b, respectively), which are arranged adjacent to one another immediately resting on the boarding 6, with opposite shaped edges 15, 16 of their own arranged in use parallel to the direction D of extension of the pitch 4, mechanically coupled by superposition, in a known way, for example by means of a purposely provided bending machine, or by means of the device described in the aforementioned copending patent application, like in any metal roofing of a known type.

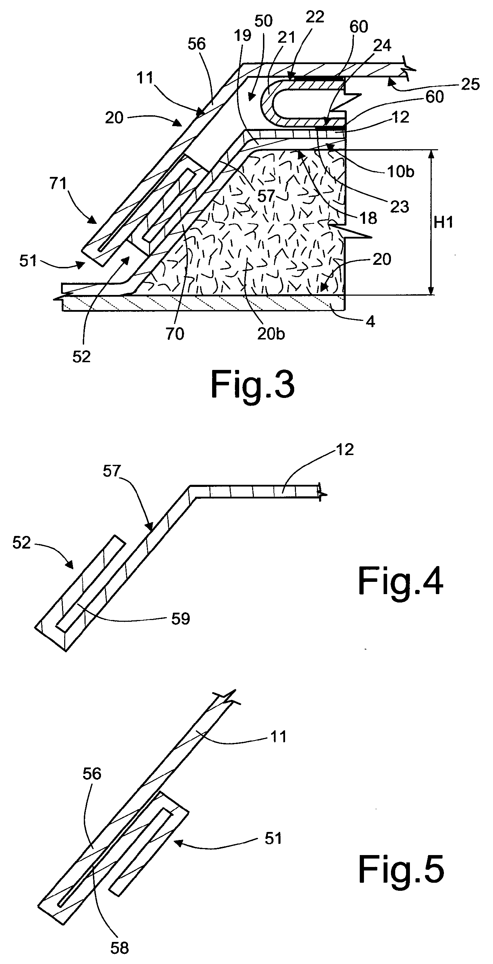

However, unlike known roofing, the panels 10 each have a central portion 18 coined so as to define on the panel at least one channel-shaped ribbing 19 arranged in use oriented in the direction D of the pitch 4 and projecting in cantilever fashion therefrom, which has the concavity facing the pitch 4 so as to delimit between the pitch 4 and the respective panel 10 a channel-shaped compartment (Figure 3) filled in use with a thermally insulating material 20b of any known type, which also has a certain strength for strengthening the panels 10, for example constituted by a polyurethane panel.

According to one aspect of the invention, in the plurality of panels 10b designed to cover the part of roof 2 that is to be rendered suitable for capturing solar energy, the ribbing 19 has a first pre-set height H1, whereas in the panels 10c designed to cover the part of roof 2 that is not to be rendered suitable for capturing solar energy (for example, because it is exposed to the North) the ribbing 19 has a second pre-set height H2, greater than H1.

In particular, in the panels 10b the rib 19, which is preferably single, is not only lower, but also supports, on the side opposite to the pitch 4, an energy module 20 in turn comprising at least the panel 11, which has a shape matching that of the ribbing 19 and is designed to be overlappingly coupled thereto so as to define, substantially without solution of continuity, an extension in height thereof to the height H2 of the ribbing 19 (which is also preferably single) of the panels 10c.

The energy module 20 further comprises at least one pipe 21 made of the same metal material as that of the panels 10b, 11. In the case in point, the panels 10, 11 and pipes 21 are made of copper or a copper alloy. The pipe 21 has a flattened cross section and is arranged with its own axis oriented in the direction D of the pitch 4 and with its respective opposite plane faces 22, 23 packed tight between a respective external and top plane surface 24 of the ribbings 19 and an internal and bottom surface 25 of each panel 11. Preferably, for simplicity of construction, between the ribbings 19 of the panels 10b and the panels 11 a plurality of pipes 21 are arranged, identical to one another, with flattened cross section, set at a distance from one another in a direction perpendicular to the direction D of extension of the pitch 4 and preferably held in position by spacer elements 26 (Figure 2), which are likewise set between the panels 10b and 11, and also serve for strengthening the energy module 20. Preferably, at least the spacer 26 that is located in a substantially central position (i.e., at the same distance) from the edges 15, 16 is constrained to the panel 11 by means of rivets or screws 27.

Opposite ends 28 of the pipes 21 are hydraulically connected to respective manifolds 30 arranged on the pitch 4 in a direction transverse thereto, for example, within purposely provided compartments 31 left by the boarding 6, said manifolds being connected in a known way to a thermo-hydraulic system of a traditional type. Given that the pipes 21 have a flattened cross section, the hydraulic connection is obtained by means of fittings 32, which are preferably curved (but can also be rectilinear, according to the circumstances) formed (Figure 7) by a funnel-shaped adapter element 33, which has opposite ends 34, 35, the former with flattened cross section and designed to be coupled in a fluid-tight way to an end 28, by spigot jointing or by welding, and the latter with round cross section, and designed to be coupled to a manifold 30 by means of a threaded joint 36.

In this way, it is possible to produce the panels 10, 11 in series, of standard dimensions, and cover pitches 4 of a length greater than that of the sides 15, 16 arranging a number of series of rows of panels 10 coupled to one another, in sequence in the direction D, as illustrated in Figure 1.

In order to cover in use the compartments 31, at least some respective opposite transverse edges 40, 41 of the panels 11 (Figure 1), arranged in use in a direction transverse to the pitch 4, i.e., perpendicular to the direction D of extension of the pitch 4, extend in cantilever fashion from corresponding transverse edges 42 of the panels 10b, to cover the manifolds 30 at least partially. Preferably, the edges 40, 41 extending in cantilever fashion are arranged adjacent to one another in the direction D of extension of the pitch 4 and are coupled so as to overlap one another, like tiles, in order to cover completely the manifolds 30 and the corresponding compartment 31 for housing said manifolds.

According to the example of embodiment illustrated in Figures 1 and 6, the pipes 21 rest directly on the surface 24 of the ribs 19 of the panels 10b. This solution is, however, far from practical, in so far as it requires the energy modules 20 to be provided on site, laying the pipes 21 and the panels 11 on the panels 10b previously laid and fixed to the boarding 6.

According to a further aspect of the invention, it is consequently preferred to provide energy modules 20 that can be prefabricated, even at the expense of a greater consumption of copper or copper alloy for producing them. For this purpose, as is illustrated in Figure 2 and in Figures 3, 4 and 5, each energy module 20 further comprises a further panel, in the case in point the panel 12, which has a shape matching both that of the panel 11 of the same module 20 and that of the ribbing 19 of the corresponding panel 10b that carries the module 20 in question.

Each panel 12 is coupled by superposition to a panel 11 on the side facing the underlying panel 10b in such a way as to delimit between each pair of panels 11, 12 coupled by superposition a channel-shaped chamber 50 housing inside it the pipes 21 and the spacers 26 (Figure 2a), with the plane faces 22, 23 of the pipes 21 coupled in contact, respectively, against the panel 11 and the panel 12, in such a way that the panel 12 is arranged between the pipes 21 and the external surface 24 of the ribbing 19 of the underlying panel 10b, in close contact with both of them so that the pipes 21 are packed tight against the surface 24 only indirectly.

In order to guarantee a coupling in close contact between panels 10, 11, 12 and pipes 21, substantially in the absence of interposition of layers of air that would be thermally insulating, each pair of panels 11, 12 coupled by superposition is constrained in a fixed way by means of respective opposite edges 51, 52 thereof set perpendicular to the edges 40, 41, i.e., directed in use parallel to the direction D of extension of the pitch 4.

The edges 51, 52 are in particular coupled by superposition bending and are shaped so as to determine, when coupling has occurred, a compression of the pipes 21 between the panels 11 and 12, with slight elastic deformation of all the elements involved (pipes 21 and panels 11, 12), precisely in order to expel any air that may be present between the surfaces 22, 23 coupled with the respective panels 11 and 12.

For said purpose, according to a possible non-limiting embodiment, the edges 52 (Figure 4) are bent to form a U on the side opposite to the pitch 4, whilst the edges 53 are bent to form a double U, first in a direction opposite to the pitch 4 and then in the direction of the pitch 4 so that they can be coupled by snap action to the edges 52. Once again for said purpose, the U bends are made so as to leave between the bent edges 51 and 52 and respective opposite sides 56 and 57 of the panels 11, 12 blind compartments 58, 59 of a non-uniform width, which narrows progressively towards the respective open ends, the compartment 58 being designed to allow for elastic deformation of the' edge 51, and the compartment 59 being designed to receive driven therein the terminal portion of the edge 51 (Figures 4, 5, and 3).

In addition, or as an alternative, to the structure described, the plane faces 22, 23 of the pipes 21 are glued to the corresponding panels 11, 12 by means of a layer 60 of a thermally conductive adhesive. Preferably, the adhesive is chosen in the group consisting of: silicone glue with metal-particle fillers (copper or nickel), of the AEC Polymers^{®} type; UMICORE MICROBOND GEKO^{®} glue (which is in itself conductive); MASTERBOND^{®} epoxy glue with metal-particle fillers.

On the basis of what has been described, the energy module 20 that can be prefabricated and can be provided as autonomous self-supporting unit comprising a pair of panels 11, 12 shaped in a way matching the transverse profile of the underlying ribbing 19 and coupled to one another by superposition along the respective edges 51, 52 so as to delimit between the panels 11, 12 the channel-shaped chamber 50 for housing the pipes 21, enables in any case pack-tight coupling of the latter between the panels 11, 12 to an extent sufficient to enable in use heat exchange by conduction between the pipe 21 and the panels 11, 12.

In addition, the edges 51, 52 are shaped in such a way that, once coupled together, they extend in cantilever fashion from the energy module 20 so as to project in use in the direction of the pitch 4 and be coupled to, by laterally bearing upon, respective sides 70 of the underlying ribbing 19 (Figure 3).

In particular, the opposite edges 51, 52, once coupled in twos (Figure 3, where only the left side of the module 20 is visible, the right one being symmetrical) are to form respective opposite side cantilever edges 71 of the energy module 20, which project in use towards the pitch 4 consequently enabling, in the roofing structure 1, lateral blocking of each module 20 in the direction transverse to the direction D of extension of the pitch 4 by means of coupling by superposition of the edges 71 with the respective sides 70 of the ribbings 19 of the panels 10b.

As has already been said, the structure 1, in the parts that are not designed for capturing solar radiation, can be made by resting on the boarding 6, instead of the panels 10b and in the same way, the panels 10c, in which the ribbing 19 has a height H2 greater than the height H1 and such that the profile of the ribbing 19 having height H2 is substantially identical to that of the unit constituted by each energy module 20 and the corresponding ribbing 19 having height H1 to which the module 20 is overlappingly coupled, as is illustrated clearly in Figures 2b and 2a.

Hence, with a simple operation of deeper drawing to be performed on the panels 10c, one of the purposes of the invention is readily achieved, i.e., the aesthetic identity between sections of the roof designed for solar capturing and ones not designed for solar capturing, leaving also ample aesthetic freedom in the conformation of the ribbings 19, a conformation that can be any whatsoever, provided that it is designed to enable, in the chosen profile, the chamber 50 to be obtained, and to leave sides 70 suitable to function as shoulders for lateral blocking of the modules 20. These may then also be fixed in any appropriate way to the underlying panels 10b, but there is no real need for fixing in so far as the modules 20 are kept fixed on the panels 10b as a result of their own weight.

## Claims

1. A roofing structure (1) comprising a plurality of adjacent panels (10, 11, 12) made of sheet metal, namely comprising:
- first panels (10b, 10c) made of sheet metal each exhibiting a central portion shaped in such a way as to form on the panel at least one channel-shaped ribbing (19) arranged in use in the direction of the pitch (4) of the roof to be covered, a first plurality (10b) of said first panels having the ribbing (19) of a pre-determined first height (H1); and
- at least an energy module (20) which is supported by the ribbing (19) of said pre-determined first height (H1), on the side opposite to the pitch;
- the energy module (20) comprising at least one second panel (11) made of sheet metal and at least one pipe (21) made of the same metal material as the panels (10,11), with a flattened cross-section, arranged in the direction of the pitch of the roof and with its respective opposite flat faces (22, 23) sandwiched between a respective outer and upper flat surface (24) of the ribbing (19) and a respective inner and lower flat surface (25) of the second panel (11); **characterized in that**, in combination:
- said central portion of said first panels (10b, 10c) shaped in such a way as to form on the panel at least one channel-shaped ribbing (19) has the concave side turned towards the pitch, so as to form between the pitch and the panel a channel-shaped compartment (20) filled in use with an insulating material (20b);
- said second panel (11) is of a shape matching with that of said ribbing (19) and designed to overlappingly couple therewith to define without solution of continuity, an extension in height thereof;
- said respective opposite plane faces (22, 23) of said at least one pipe (21) being packed tight between said respective external and top plane surface (24) of the ribbings (19) and said internal and bottom surface (25) of each second panel (11).

2. A roofing structure (1) according to claim 1, **characterized in that** between the said ribbing (19) of a first panel (10b) and a said second panel (11) is arranged a plurality of pipes (21) with a flattened cross-section, with opposite ends (28) of the pipes being connected hydraulically to respective manifolds (30) arranged transversely on the pitch of the roof.

3. A roofing structure (1) according to claim 2, **characterized in that** respective opposing first edges (40, 41) of the second panels (11), in use arranged transversely to the pitch of the roof, overhangingly extend from corresponding first edges (42) of the first panels (10b), at least partially covering said manifolds (30).

4. A roofing structure (1) according to claim 3, **characterized in that** the opposing first edges (40, 41) of each pair of second panels (11) arranged adjacent to each other in the direction of the pitch of the roof couple and overlap, completely covering said manifolds (30).

5. A roofing structure (1) according to any of the preceding claims, **characterized in that** each said energy module (20) also includes a third panel (12) made of sheet metal of a shape matching that of the corresponding second panel (11) to which it is overlappingly coupled on the side facing the first panels (10b) so as to create between each second and third coupled and overlapping panel a channel-shaped chamber (50) housing at least said one pipe (21) with a flattened cross-section with its flat faces (22, 23) coupled in contact with said second and third panels (11, 12).

6. A roofing structure (1) according to claim 5, **characterized in that** each coupled and overlapping second and third panel (11, 12) are mutually held in place by respective opposing second edges (51, 52) thereof, which are coupled by folding over, arranged in use parallel to the pitch of the roof (49).

7. A roofing structure (1) according to claim 6, **characterized in that** said second edges (51, 52) are shaped in such a way as to provide, once coupled, a compression of at least one said pipe (21) with a flattened cross-section between the respective said second and third panels (11, 12).

8. A roofing structure (1) according to claim 7, **characterized in that** said second edges (52) of the third panels (12) are folded in a U-shape on the side opposite the pitch of the roof, while the second edges (51) of the second panels (11) are folded in a double U-shape, first in the direction opposite the pitch of the roof and then towards the pitch of the roof, so that they snappingly couple together with the second edges (52) of the third panels (12).

9. A roofing structure (1) according to any of the claims from 5 to 8, **characterized in that** said flat faces (22, 23) of at least one said pipe (21) with a flattened cross-section are stuck to the corresponding said second and third panels by means of a layer (60) of heat conducting adhesive, preferably chosen from the group consisting of: silicone adhesive filled with metallic particles (copper or nickel); epoxy adhesive filled with metallic particles.

10. A roofing structure (1) according to any of the previous claims, **characterized in that** in a second plurality (10c) of said first panels, the said ribbing (19) has a second pre-determined height (H2), which is higher than the first so that the profile of the ribbing (19) with the second pre-determined height (H2) is substantially identical to that of the unit comprised by each energy module (20) and the relative ribbing (19) with the first pre-determined height (H1) to which the said energy module (20) is overlappingly coupled.

11. A roofing structure (1) according to any of the preceding claims, **characterized in that** said panels (10, 11, 12) and said pipes (21) are made of copper or a copper alloy.

12. A roofing structure (1) according to any of the preceding claims, **characterized in that** each energy module (20) is fixed in a direction transverse to the pitch of the roof (4) by means of the overlapping of its overhanging side edges (71), which project towards the pitch of the roof, with the respective side edges (70) of the ribbing (19) on the first panels (10b).

13. An energy module (20) that can be coupled to a roofing structure (1) for a roof (2) having a plurality of ribbings (19) arranged in the direction of the pitch (4) of the roof and overhanging from it, comprising a pair of panels (11, 12) made of sheet metal of a shape matching to the transverse profile of the ribbing (19) and coupled to each other by overlapping along respective longitudinal edges (51, 52) arranged in use parallel along the pitch (4) of the roof, to create between the same panels a channel-shaped chamber (50) housing at least one pipe (21) made of the same metal material as the panels (11, 12), with a flattened cross-section, arranged parallel to the pitch of the roof and having respective flat faces (22, 23); said coupled and overlapping longitudinal edges (51, 52) of the panels extending from the energy module (20) so as to project in use towards the pitch of the roof to laterally couple in abutment with the respective sides (70) of the ribbing (19); **characterized in that**, in combination:
- said flat faces (22,23) of the at least one pipe (21) are coupled in contact with the said panels (11, 12), so that the pipe is sandwiched between them in a manner that permit in use a conductive heat exchange between the pipe (21) and the panels (11, 12);
- said longitudinal edges (51, 52) of the panels (11,12) are coupled by superposition and bending and are shaped so as to determine, when coupling has occurred, a compression of the at least one pipe (21) between the panels (11,12), with slight elastic deformation of all the elements involved (21,11,12), in order to expel any air that may be present between said flat faces (22, 23) coupled with the respective panels (11,12).

## Patentansprüche

1. Dacheindeckungsstruktur (1), umfassend eine Vielzahl von benachbarten Platten (10, 11, 12) aus Metallblech, nämlich umfassend:
- erste Platten (10b, 10c) aus Metallblech, die jeweils einen Zentralabschnitt aufweisen, der derart geformt ist, dass er zumindest eine kanalförmige Riffelung (19) auf der Platte ausbildet, die gebräuchlich in Richtung der zu deckenden Dachschräge (4) angeordnet ist, wobei eine erste Vielzahl (10b) dieser ersten Platten die Riffelung (19) mit einer vorgegebenen ersten Höhe (H1) besitzt; und
- zumindest ein Energiemodul (20), das durch die Riffelung (19) mit der besagten vorgegebenen ersten Höhe (H1) gestützt wird, auf der Seite gegenüber der Schräge;
- wobei das Energiemodul (20) zumindest eine zweite Platte (11) aus Metallblech und zumindest ein Rohr (21) aus dem gleichen Metallmaterial wie die Platten (10, 11) mit einem abgeflachten Querschnitt aufweist, das in Richtung der Dachschräge angeordnet ist und wobei dessen jeweils gegenüberliegende flache Flächen (22, 23) zwischen einer entsprechenden äußeren und oberen flachen Oberfläche (24) der Riffelung (19) und einer entsprechenden inneren und unteren flachen Oberfläche (25) der zweiten Platte (11) angeordnet sind; **dadurch gekennzeichnet, dass** in Kombination:
- die konkave Seite des besagten Zentralabschnitts der besagten ersten Platten (10b, 10c), der derart geformt ist, dass er zumindest eine kanalförmige Riffelung (19) auf der Platte ausbildet, hin zu der Schräge gewandt ist, um somit zwischen der Schräge und der Platte ein kanalförmiges Abteil (20) zu bilden, das gebräuchlich mit einem Isolationsmaterial (20b) gefüllt ist;
- die besagte zweite Platte (11) eine Form besitzt, die zu derjenigen der besagten Riffelung (19) passt und ausgestaltet ist, um an die besagte Riffelung in überlappender Art und Weise gekoppelt zu sein, um ohne Kontinuitätslösung eine Höhenerstreckung der besagten Riffelung zu definieren;
- wobei die besagten jeweils gegenüberliegenden planaren Flächen (22, 23) des zumindest einen Rohrs (21) dicht zwischen die besagte entsprechende externe und obere planare Oberfläche (24) der Rifflungen (19) und die besagte interne und untere Oberfläche (25) jeder zweiten Platte (11) gepackt sind.

2. Dacheindeckungsstruktur (1) gemäß Anspruch 1, **dadurch gekennzeichnet, dass** zwischen der besagten Riffelung (19) einer ersten Platte (10b) und einer besagten zweiten Platte (11) eine Vielzahl von Rohren (21) mit abgeflachtem Querschnitt angeordnet sind, wobei gegenüberliegende Enden (28) der Rohre hydraulisch mit entsprechenden Mehrfachverteilern (30) verbunden sind, die quer auf der Dachschräge angeordnet sind.

3. Dacheindeckungsstruktur (1) gemäß Anspruch 2, **dadurch gekennzeichnet, dass** jeweils gegenüberliegende erste Kanten (40, 41) der zweiten Platten (11), die gebräuchlich quer zur Dachschräge angeordnet sind, auf überstehende Art und Weise von entsprechenden ersten Kanten (42) der ersten Platten (10b) abstehen, und zumindest teilweise die besagten Mehrfachverteiler (30) überdecken.

4. Dacheindeckungsstruktur (1) gemäß Anspruch 3, **dadurch gekennzeichnet, dass** die gegenüberliegenden ersten Kanten (40, 41) von jedem Paar von zweiten Platten (11), die aneinander angrenzend in Richtung der Dachschräge angeordnet sind, aneinanderkoppeln und überlappen, und vollständig die besagten Mehrfachverteiler (30) überdecken.

5. Dacheindeckungsstruktur (1) nach einem der vorstehenden Ansprüche, **dadurch gekennzeichnet, dass** jedes der besagten Energiemodule (20) auch eine dritte Platte (12) aus Metallblech umfasst, die eine Form besitzt, die zu derjenigen der entsprechenden zweiten Platte (11) passt, die an der in überstehender Art und Weise an der der ersten Platte (10b) zugewandten Seite gekoppelt ist, um somit zwischen jeder zweiten und dritten gekoppelten und überstehenden Platte eine kanalförmige Kammer (50) zu bilden, in der zumindest ein Rohr (21) mit einem abgeflachten Querschnitt untergebracht ist, dessen flache Flächen (22, 23) mit den besagten zweiten und dritten Platten (11, 12) in Kontakt gekoppelt sind.

6. Dacheindeckungsstruktur (1) gemäß Anspruch 5, **dadurch gekennzeichnet, dass** jede gekoppelte und überlappende zweite und dritte Platte (11, 12) gegenseitig durch jeweilige gegenüberliegende zweite Kanten (51, 52) der Platten in Position gehalten werden, die durch Umklappen aneinander gekoppelt werden, und gebräuchlich parallel zur Dachschräge (49) angeordnet sind.

7. Dacheindeckungsstruktur (1) gemäß Anspruch 6, **dadurch gekennzeichnet, dass** die besagten zweiten Kanten (51, 52) derart geformt sind, um, sobald gekoppelt, eine Kompression von zumindest einem Rohr (21) mit einem abgeflachten Querschnitt zwischen den jeweiligen zweiten und dritten Platten (11, 12) bereitzustellen.

8. Dacheindeckungsstruktur (1) gemäß Anspruch 7, **dadurch gekennzeichnet, dass** die besagten zweiten Kanten (52) der dritten Platten (12) U-förmig auf die Seite gegen die Dachschräge gefaltet sind, während die zweiten Kanten (51) der zweiten Platten (11) doppelt U-förmig gefaltet sind, zunächst in Richtung gegen die Dachschräge und dann hin zu der Dachschräge, so dass sie auf einschnappende Art und Weise mit den zweiten Kanten (52) der dritten Platten (12) aneinander koppeln.

9. Dacheindeckungsstruktur (1) gemäß einem der Ansprüche 5 bis 8, **dadurch gekennzeichnet, dass** die besagten flachen Flächen (22, 23) von zumindest einem der besagten Rohre (21) mit abgeflachtem Querschnitt vermittels einer Schicht (60) aus wärmeleitendem Klebstoff, vorzugsweise ausgewählt aus der Gruppe bestehend aus: Silikonkleber gefüllt mit Metallpartikeln (Kupper oder Nickel) und Epoxidkleber gefüllt mit Metallpartikeln, an den entsprechenden besagten zweiten und dritten Platten anhaften.

10. Dacheindeckungsstruktur (1) gemäß einem der vorstehenden Ansprüche, **dadurch gekennzeichnet, dass** bei einer zweiten Vielzahl (10c) der besagten ersten Platten die zweite Riffelung (19) eine zweite vorgegebene Höhe (H2) besitzt, die höher ist als die erste, so dass das Profil der Riffelung (19) mit der zweiten vorgegebenen Höhe (H2) im Wesentlichen identisch zu derjenigen der Einheit ist, die jeweils durch die Energiemodule (20) und die relative Riffelung (19) mit der ersten vorgegebenen Höhe (H1) umfasst ist, an welche das besagte Energiemodul (20) in überstehender Art und Weise gekoppelt ist.

11. Dacheindeckungsstruktur (1) gemäß einem der vorstehenden Ansprüche, **dadurch gekennzeichnet, dass** die besagten Platten (10, 11, 12) und die besagten Rohre (21) aus Kupfer oder einer Kupferlegierung gefertigt sind.

12. Dacheindeckungsstruktur (1) gemäß einem der vorstehenden Ansprüche, **dadurch gekennzeichnet, dass** jedes Energiemodul (20) in einer Richtung quer zur Schräge des Dachs (4) vermittels der Überlappung der überstehenden Seitenkanten (71) gesichert ist, die hin zu der Schräge des Dachs vorstehen, mit den jeweiligen Seitenkanten (70) der Riffelung (19) an den ersten Platten (10b).

13. Energiemodul (20), das an eine Dacheindeckungsstruktur (1) für ein Dach (2) mit einer Vielzahl von Rifflungen (19) gekoppelt werden kann, die in der Richtung der Dachschräge (4) angeordnet sind und von dieser überstehen, aufweisend ein Paar von Platten (11, 12) aus Metallblech mit einer Form, die zu dem Querprofil der Riffelung (19) passt, und die aneinander durch Überlappen entlang jeweiliger Längskanten (51, 52) gekoppelt sind, die gebräuchlich parallel entlang der Dachschräge (4) angeordnet sind, um zwischen diesen Platten eine kanalförmige Kammer (50), die zumindest ein Rohr (21) aus dem gleichen Metallmaterial wie die Platten (11, 12) beherbergt, mit einem abgeflachten Querschnitt zu schaffen, die parallel zu der Dachschräge angeordnet sind und jeweils flache Flächen (22, 23) aufweisen; wobei sich die besagten gekoppelten und überlappenden Längskanten (51, 52) der Platten von dem Energiemodul (20) erstrecken, um so gebräuchlich hin zu der Dachschräge vorzustehen, um seitlich in Anlage mit den jeweiligen Seiten (70) der Riffelung (19) zu koppeln; **dadurch gekennzeichnet, dass** in Kombination:
- die besagten flachen Flächen (22, 23) des zumindest einen Rohrs (21) in Kontakt mit den besagten Platten (11, 12) gekoppelt sind, so dass das Rohr zwischen ihnen derart angeordnet ist, dass gebräuchlich ein Wärmeaustausch zwischen dem Rohr (21) und den Platten (11, 12) gestattet wird;
- die besagten Längskanten (51, 52) der Platten (11, 12) durch Überlagerung und Krümmung gekoppelt sind und derart geformt sind, um bei erfolgter Kopplung eine Kompression des zumindest einen Rohrs (21) zwischen den Platten (11, 12) mit einer einhergehenden leichten elastischen Deformation aller beteiligten Elemente (21,11, 12) zu bestimmen, um jedwede Luft, die zwischen den besagten flachen Flächen (22, 23), die mit den jeweiligen Platten (11, 12) gekoppelt sind, vorhanden sein mag, auszutreiben.

## Revendications

1. Structure de toiture (1) comprenant une pluralité de panneaux adjacents (10, 11, 12) constitués de métal en feuille, à savoir comprenant :
- des premiers panneaux (10b, 10c) constitués de métal en feuille comportant chacun une partie centrale conformée de manière à former, sur le panneau, au moins un nervurage en forme de canal (19) agencé, à l'utilisation, dans le sens de la pente (4) du toit à couvrir, une première pluralité (10b) desdits premiers panneaux comportant le nervurage (19) d'une première hauteur prédéterminée (H1) ; et
- au moins un module d'énergie (20) qui est supporté par le nervurage (19) de ladite première hauteur prédéterminée (H1), sur le côté opposé à la pente ;
- le module d'énergie (20) comprenant au moins un deuxième panneau (11) constitué de métal en feuille et au moins un conduit (21) constitué du même métal que les panneaux (10, 11), présentant une section transversale aplatie, agencé dans le sens de la pente du toit et dont les faces plates opposées respectives (22, 23) sont prises en sandwich entre une surface plate supérieure et externe respective (24) du nervurage (19) et une surface plate inférieure et interne respective (25) du deuxième panneau (11) ; **caractérisée en ce que**, en combinaison :
- ladite partie centrale desdits premiers panneaux (10b, 10c) conformée de manière à former, sur le panneau, au moins un nervurage (19) en forme de canal (19), a le côté concave orienté vers la pente, afin de former, entre la pente et le panneau, un compartiment en forme de canal (20) rempli, à l'utilisation, d'un matériau isolant (20b) ;
- ledit deuxième panneau (11) a une forme épousant celle dudit nervurage (19) et est conçu pour s'accoupler par chevauchement avec lui afin de définir, sans solution de continuité, une extension de sa hauteur ;
- lesdites faces planes opposées respectives (22, 23) dudit au moins un conduit (21) étant comprimées serrées entre ladite surface plane supérieure et externe respective (24) du nervurage (19) et ladite surface inférieure et interne (25) de chaque deuxième panneau (11).

2. Structure de toiture (1) selon la revendication 1, **caractérisée en ce qu'**entre ledit nervurage (19) d'un premier panneau (10b) et un dit deuxième panneau (11) est agencée une pluralité de conduits (21) à section transversale aplatie, les extrémités opposées (28) des conduits (21) étant raccordées hydrauliquement à des collecteurs respectifs (30) agencés transversalement sur la pente du toit.

3. Structure de toiture (1) selon la revendication 2, **caractérisée en ce que** des premiers bords opposés respectifs (40, 41) des deuxièmes panneaux (11), agencés, à l'utilisation, transversalement à la pente du toit, s'étendent en surplomb depuis des premiers bords correspondants (42) des premiers panneaux (10b), recouvrant au moins en partie lesdits collecteurs (30).

4. Structure de toiture (1) selon la revendication 3, caractérisée en ce les premiers bords opposés (40, 41) de chaque paire de deuxièmes panneaux (11) agencés adjacents l'un à l'autre dans le sens de la pente du toit s'accouplent et se chevauchent, recouvrant complètement lesdits collecteurs (30).

5. Structure de toiture (1) selon l'une quelconque des revendications précédentes, **caractérisée en ce que** chaque module d'énergie (20) comprend également un troisième panneau (12) constitué de métal en feuille, ayant une forme épousant celle du deuxième panneau correspondant (11) auquel il est accouplé en chevauchement sur le côté tourné vers les premiers panneaux (10b) afin de créer entre chaque deuxième et troisième panneau accouplé et en chevauchement une chambre en forme de canal (50) logeant au moins ledit conduit (21) à section transversale aplatie avec ses faces plates (22, 23) accouplées en contact avec lesdits deuxième et troisième panneaux (11, 12).

6. Structure de toiture (1) selon la revendication 5, caractérisée en ce chacun des deuxième et troisième panneaux (11, 12) accouplés et en chevauchement sont maintenus mutuellement en place par leurs deuxièmes bords opposés respectifs (51, 52), qui sont accouplés en étant repliés, agencés, à l'utilisation, parallèlement à la pente du toit (49).

7. Structure de toiture (1) selon la revendication 6, **caractérisée en ce que** lesdits deuxièmes bords (51, 52) sont conformés de manière à produire, une fois accouplés, une compression d'au moins un dit conduit (21) à section transversale aplatie entre les deuxième et troisième panneaux (11, 12) respectifs.

8. Structure de toiture (1) selon la revendication 7, **caractérisée en ce que** lesdits deuxièmes bords (52) des troisièmes panneaux (12) sont pliés en un U sur le côté opposé à la pente du toit, tandis que les deuxièmes bords (51) des deuxièmes panneaux (11) sont pliés en un double U, tout d'abord dans le sens opposé à la pente du toit puis vers la pente du toit, de manière à s'accoupler par encliquetage avec les deuxièmes bords (52) des troisièmes panneaux (12).

9. Structure de toiture (1) selon l'une quelconque des revendications 5 à 8, **caractérisée en ce que** lesdites faces plates (22, 23) d'au moins un dit conduit (21) à section transversale aplatie sont collées auxdits deuxième et troisième panneaux correspondants au moyen d'une couche (60) d'adhésif thermoconducteur, de préférence sélectionné dans le groupe consistant en : adhésif silicone rempli de particules métalliques (cuivre ou nickel) ; adhésif époxy rempli de particules métalliques.

10. Structure de toiture (1) selon l'une quelconque des revendications précédentes, **caractérisée en ce que** dans une deuxième pluralité (10c) desdits premiers panneaux, ledit nervurage (19) a une deuxième hauteur prédéterminée (H2), qui est supérieure à la première, de manière que le profil du nervurage (19) avec la deuxième hauteur prédéterminée (H2) soit sensiblement identique à celui de l'unité composée par chaque module d'énergie (20) et le nervurage relatif (19) à la première hauteur prédéterminée (H1) auquel ledit module d'énergie (20) est accouplé en chevauchement.

11. Structure de toiture (1) selon l'une quelconque des revendications précédentes, **caractérisée en ce que** lesdits panneaux (10, 11, 12) et lesdits conduits (21) sont constitués de cuivre ou d'un alliage de cuivre.

12. Structure de toiture (1) selon l'une quelconque des revendications précédentes, **caractérisée en ce que** chaque module d'énergie (20) est fixé dans un sens transversal à la pente (4) du toit au moyen du chevauchement de ses bords latéraux en surplomb (71), qui font saillie vers la pente du toit, les bords latéraux respectifs (70) du nervurage (19) se trouvant sur les premiers panneaux (10b).

13. Module d'énergie (20) qui peut être accouplé à une structure de toiture (1) pour un toit (2) comportant une pluralité de nervurages (19) agencés dans le sens de la pente (4) du toit et en surplomb depuis celui-ci, comprenant une paire de panneaux (11, 12) constitués de métal en feuille ayant une forme épousant le profil transversal du nervurage (19) et accouplés l'un à l'autre par chevauchement le long de bords longitudinaux respectifs (51, 52) agencés, à l'utilisation, parallèlement le long de la pente (4) du toit, afin de créer entre les mêmes panneaux une chambre en forme de canal (50) logeant au moins un conduit (21) constitué du même métal que les panneaux (11, 12), à section transversale aplatie, agencé parallèlement le long de la pente du toit et comportant des faces plates respectives (22, 23) ; lesdits bords longitudinaux accouplés et en chevauchement (51, 52) des panneaux s'étendant depuis le module d'énergie (20) afin de faire saillie, à l'utilisation, vers la pente du toit pour s'accoupler, latéralement, en butée avec les côtés respectifs (70) du nervurage (19) ; **caractérisé en ce que**, en combinaison :
- lesdites faces plates (22, 23) de l'au moins un conduit (21) sont accouplées en contact avec lesdits panneaux (11, 12), de manière que le conduit soit pris en sandwich entre eux d'une manière qui permet, à l'utilisation, un échange de chaleur par conduction entre le conduit (21) et les panneaux (11, 12) ;
- lesdits bords longitudinaux (51, 52) des panneaux (11, 12) sont accouplés par superposition et cintrage et sont conformés de manière à déterminer, lorsque l'accouplement s'est produit, une compression dudit au moins un conduit (21) entre les panneaux (11, 12), avec une légère déformation élastique de tous les éléments concernés (21, 11, 12) afin d'expulser tout air qui peut être présent entre lesdites faces plates (22, 23) accouplées avec les panneaux (11, 12) respectifs.
